(19) Europäisches Patentamt

European Patent Office

Office européen des brevets

(11) **EP 1 147 139 B1**

(12) **EUROPÄISCHE PATENTSCHRIFT**

(45) Veröffentlichungstag und Bekanntmachung des Hinweises auf die Patenterteilung:
**06.09.2006 Patentblatt 2006/36**

(21) Anmeldenummer: **99962246.7**

(22) Anmeldetag: **09.12.1999**

(51) Int Cl.:
***C08F 220/12*** *(2006.01)* ***C09D 133/06*** *(2006.01)*

(86) Internationale Anmeldenummer:
**PCT/EP1999/009672**

(87) Internationale Veröffentlichungsnummer:
**WO 2000/037516 (29.06.2000 Gazette 2000/26)**

(54) **WÄSSRIGE COPOLYMERISATDISPERSION, VERFAHREN ZU IHRER HERSTELLUNG SOWIE IHRE VERWENDUNG**

AQUEOUS COPOLYMER DISPERSION, ITS METHOD OF PRODUCTION AND ITS USE

DISPERSION AQUEUSE DE COPOLYMERE, SON PROCEDE DE PRODUCTION ET SON UTILISATION

(84) Benannte Vertragsstaaten:
**AT BE CH CY DE DK ES FI FR GB GR IE IT LI LU MC NL PT SE**

(30) Priorität: **19.12.1998 DE 19858851**

(43) Veröffentlichungstag der Anmeldung:
**24.10.2001 Patentblatt 2001/43**

(73) Patentinhaber: **Celanese Emulsions GmbH 61476 Kronberg/Ts. (DE)**

(72) Erfinder:
• **BEYER, Dierk**
  **D-65929 Frankfurt (DE)**
• **RENISCH, Volker**
  **D-65719 Hofheim (DE)**
• **KUROPKA, Rolf**
  **D-55278 Selzen (DE)**
• **DE ALMEIDA CARVALHO, Susana, Maria**
  **P-2780 Oeiras (PT)**

(74) Vertreter: **Ackermann, Joachim Postfach 11 13 26 60048 Frankfurt am Main (DE)**

(56) Entgegenhaltungen:
**EP-A- 0 778 296        FR-A- 2 697 530**

**Beschreibung**

Die vorliegende Erfindung betrifft neue wässrige Copolymerisatdispersionen, Verfahren zu deren Herstellung sowie deren Verwendung insbesondere in elastischen Beschichtungen.

Aus der EP-A-0 458 144 sind wässrige Kunstharzdispersionen bekannt, deren Kunstharze neben Monomeren wie Acryl- oder Methacrylsäureestern, Styrol und Vinylestern, monoethylenisch ungesättigten Acetophenon- und/oder Benzophenonderivaten, mindestens ein ungesättigtes Keton oder einen Aldehyd einpolymerisiert enthalten, sowie eine mindestens zwei Säurehydrazidgruppen enthaltende Verbindung aufweisen, und die durch radikalische Emulsionspolymerisation erhalten werden. Diese Kunstharzdispersionen werden zum Beschichten, Kleben, Dichten und Imprägnieren empfohlen.

Die Verwendung relativ teurer monoethylenisch ungesättigter Acetophenon- und/oder Benzophenonderivate, sowie ungesättigter Keton- und/oder Aldehydderivate und einer mindestens zwei Säurehydrazidgruppen enthaltenden Verbindung, die nachträglich zugegeben wird, bewirkt, daß das entsprechende Kunstharz selbst relativ teuer ist. Ein Nachteil dieser Kunstharze ist, daß ihre Filme zwar hohe Reißdehnungswerte erreichen, daß aber die Filme nach einer definierten Dehnung, entweder durch Anlegen eines definierten Gewichts oder nach Dehnung um eine definierte Distanz, nur eine ungenügende Rückstellkraft aufweisen und demzufolge im gedehnten Zustand verbleiben. Ein weiterer Nachteil von Beschichtungen mit diesen Kunstharzen ist, daß sie häufig eine schlechte Beständigkeit gegen Wassereinwirkung kurz nach dem Auftragen auf das Substrat aufweisen und eine hohe Wasseraufnahme zeigen. Weiterhin weisen diese Beschichtungen häufig eine starke Neigung zum Reemulgieren bzw. zum Blistering nach kurzer Exposition mit Wasserdampf auf.

In der EP-A-0 599 676 werden wässrige Polymerdispersionen offenbart, deren Kunstharze neben Monomeren wie Acryl- oder Methacrylsäureestern und Styrol, monoethylenisch ungesättigte Acetophenon- und/oder Benzophenonderivate, sowie eine mit Sauerstoff reagierende Dicyclopentadienyl-Gruppe aufweisen. Diese Kunstharzdispersionen werden für elastische Beschichtungen empfohlen.

Nachteilig an diesen Bindemitteln ist, daß der Prozeß der Vernetzung von Farbfilmen dieser Bindemittel relativ langsam vonstatten geht und keine genügende Elastizität im Sinne einer Rückstellkraft nach rißbedingter Dehnung der Farbe vorhanden ist. Außerdem können starke Unterschiede in den Eigenschaften einer Beschichtung auf Basis derartiger Kunstharze auftreten, je nachdem, ob sie an einer der Sonne zugewandten Seite eines Gebäudes angebracht ist, oder an einer nicht der Sonne ausgesetzten Stelle. Ferner wirken allylische Doppelbindungen während der Herstellung der Kunstharzdispersionen mittels radikalischer Polymerisation inhibierend und erschweren somit deren Herstellung.

Die EP-A-0 778 296 betrifft wässrige Polymerdispersionen, deren Kunstharze neben Monomeren wie Acryl- oder Methacrylsäureestern, Methylstyrol oder andere alkylsubstituierte Styrole und optional Acrylnitril einpolymerisiert enthalten. Diese Kunstharzdispersionen werden als Bindemittel für elastische Beschichtungen und Dichtmassen empfohlen.

Nachteilig an diesen Bindemitteln ist, daß der Prozeß der Vernetzung von Farbfilmen dieser Bindemittel unter Einfluß von Licht relativ langsam vonstatten geht und keine genügende Elastizität im Sinne einer Rückstellkraft nach rißbedingter Dehnung der Farbe vorhanden ist. Außerdem können starke Unterschiede in den Eigenschaften einer Beschichtung auf Basis derartiger Kunstharze auftreten, je nachdem, ob sie an einer der Sonne zugewandten Seite eines Gebäudes angebracht ist, oder an einer nicht der Sonne ausgesetzten Stelle. Ein weiterer Nachteil von Beschichtungen mit diesen Kunstharzen ist, dass sie häufig eine schlechte Beständigkeit gegen Wassereinwirkung kurz nach dem Auftragen auf das Substrat aufweisen. Weiterhin weisen diese Beschichtungen häufig eine starke Neigung zum Reemulgieren bzw. zum Blistering nach kurzer Exposition mit Wasserdampf auf. Eine Verwendung von Acrylnitril in diesen Bindemitteln führt außerdem, sowohl zu einer leichten Gelbfärbung, als auch zu einer schlechten Stabilität der Beschichtungen gegenüber basischen Substraten durch Verseifung der Acrylnitril-Gruppe im Copolymeren, was zu einer stark erhöhten Empfindlichkeit gegenüber Wasser führt.

Der vorliegenden Erfindung lag daher die Aufgabe zugrunde, ein Kunstharz zu entwickeln, welches in der Beschichtung sowohl eine niedrige Wasseraufnahme, als auch eine besonders geringe Reemulgierbarkeit nach Behandlung mit Wasserdampf, bei gleichzeitig guter Reißdehnung und guter Relaxation nach definierter Dehnung aufweist.

Diese Aufgabe wird gelöst durch eine wässrige Copolymerisatdispersion, im wesentlichen bestehend aus

A) einer wäßrigen Dispersion eines Copolymerisates mit einem Feststoffanteil von 20 bis 65 Gew.-%, wobei das Copolymerisat aus

a) 40 bis 99,9 Gew.-%, vorzugsweise 65 bis 85 Gew.-%, mindestens eines Esters aus 3 bis 6 C-Atome enthaltenden $\alpha,\beta$-monoethylenisch ungesättigten Carbonsäuren und 1 bis 18 C-Atome enthaltenden Alkanolen und 0 bis 40 Gew.-%, vorzugsweise 15 bis 35 Gew.-%, mindestens einer vinylaromatischen Verbindung (Monomere a),

b) 0,05 bis 10 Gew.-% mindestens einer 3 bis 8 C-Atome enthaltenden $\alpha,\beta$-monoethylenisch ungesättigten ein-

oder zweibasischen Säure, und/oder deren Anhydride und 0 bis 10 Gew.-% wenigstens eines 3 bis 8 C-Atome enthaltenden $\alpha,\beta$-monoethylenisch ungesättigten Carbonsäureamids, welches am Stickstoff einfach oder doppelt mit bis zu 5 C-Atomen enthaltenden Alkylen, Alkanolen, Alkylsulfaten oder Alkylethersulfaten substituiert sein kann (Monomere b),

c) 0,05 bis 10 Gew.-% mindestens eines monoethylenisch ungesättigten, vernetzenden Monomeren (Monomere c), wobei es sich bei mindestens einem der vernetzenden Monomere um eine Silan der allgemeinen Formel $CH_2=CHSi(OX)_3$, ein Silan der allgemeinen Formel $CH_2=CZ-COO-Y-Si(OX)_3$, ein ethylenisch ungesättigtes Derivat des Glycidols, ein ketogruppenhaltiges Monomer, ein Alkoxyvinylsilan, ein (Meth)acryloyloxyalkylsulfonat, -sulfat oder - phosphat, Ethensulfonat oder ein polymerisierbares Ethylenharnstoffderivat handelt, wobei X für ein H-Atom, eine Acyl-Gruppe oder eine Alkylgruppe mit maximal drei C-Atomen, Z für ein H-Atom, eine Methylgruppe oder eine Ethylgruppe und Y für eine $C_nH_{2n}$,-Gruppe mit n = 2 bis 6 steht, und

d) 0 bis 30 Gew.-% mindestens eines sonstigen copolymerisierbaren monoethylenisch ungesättigten Monomeren (Monomere d), in einpolymerisierter Form,

aufgebaut ist, und wobei die Gewichtsanteile der Monomeren a, b, c und d innerhalb der angegebenen Grenzen so gewählt sind, daß ein aus diesen Monomeren aufgebautes Kunstharz eine Glasübergangstemperatur im Bereich von -50 bis 35°C, vorzugsweise von -40 bis 10°C und besonders bevorzugt von -30 bis -10°C, aufweisen würde,

B) 0 bis 10 Gew.-%, vorzugsweise 0,02 bis 2 Gew.-%, bezogen auf das Copolymerisat A, an Benzophenon, Acetophenon, einem oder mehreren Acetophenon- oder Benzophenonderivaten ohne ethylenisch ungesättigte Gruppe oder einem Gemisch davon,

C) 0,3 bis 10 Gew.-%, bezogen auf das Copolymerisat A, an Emulgatoren und

D) 0 bis 5 Gew.-%, vorzugsweise 0,05 bis 5 Gew.-%, bezogen auf das Copolymerisat A, an Schutzkolloiden.

Als Ester aus 3 bis 6 C-Atome enthaltenden $\alpha,\beta$-monoethylenisch ungesättigten Carbonsäuren und 1 bis 18 C-Atome enthaltenden Alkanolen werden vorzugsweise die Ester der Acryl- und/oder Methacrylsäure eingesetzt. Von besonderer Bedeutung sind dabei die Ester des Methanols, Ethanols, der Propanole, der Butanole, der Pentanole, des 2-Ethylhexanols, des iso-Octanols, sowie des n-Decanols und des n-Dodecanols. Bevorzugte vinylaromatische Verbindungen sind Styrol, Methylstyrol, Ethylstyrol, Dimethylstyrol, Diethylstyrol und Trimethylstyrol, wobei Styrol besonders bevorzugt ist.

Als 3 bis 8 C-Atome enthaltende $\alpha,\beta$-monoethylenisch ungesättigte ein- oder zweibasische Säuren werden vorzugsweise $\alpha,\beta$-monoethylenisch ungesättigte Carbonsäuren und deren wasserlösliche Derivate eingesetzt, besonders bevorzugt Acrylsäure, Methacrylsäure, Ethacrylsäure, Itaconsäure, Fumarsäure und Maleinsäure sowie deren Anhydride. Darüber hinaus kommen auch die Amide und Halbamide dieser Säuren in Betracht, wobei hiervon Acrylamid und Methacrylamid, sowie deren N-substituierte Derivate wie N,(N'-Di)methyl(meth)acrylamid, N,(N'-Di)ethyl(meth)acrylamid und N,(N'-Di)isopropyl(meth)acrylamid bevorzugt sind. Besonders bevorzugt ist Methacrylamid. Weiterhin können Acrylamid-Derivate, welche am Stickstoff einfach oder doppelt mit bis zu 5 C-Atomen enthaltenden Alkyl-, Alkanol-, Alkylsulfat- oder Alkylethersulfat-Resten substituiert sind, enthalten sein. Außerdem sind die Vinylsulfonsäure, die Vinylphosphonsäure sowie die Acrylamidoglycolsäure und die Methacrylamidoglycolsäure gut geeignet. Vorzugsweise enthalten die Kunstharze 0,3 bis 5 Gew.-% der Monomeren b einpolymerisiert. Besonders bevorzugt ist ein Gemisch aus Acrylsäure und Methacrylsäure als Monomere b, insbesondere ein Gemisch aus Acrylsäure, Methacrylsäure und Methacrylamid.

Als Monomere c werden Silane mit der allgemeinen Formel $CH_2=CH-Si(OX)_3$ eingesetzt, wobei X für ein H-Atom, eine Acyl-Gruppe und/oder eine Alkyl-Gruppe mit maximal drei C-Atomen steht. Besonders bevorzugt sind Vinyltrimethoxysilan, Vinyltriethoxysilan und Vinyltris-2-methoxysilan. Weitere mögliche Monomere c sind Silane mit der allgemeinen Formel $CH_2=CZ-COO-Y-Si(OX)_3$, wobei Z für ein H-Atom, eine Methyl- und/oder Ethyl-Gruppe, Y für eine $C_nH_{2n}$-Gruppe, mit n = 2 bis 6, und X für ein H-Atom, eine Acyl-Gruppe und/oder eine Alkyl-Gruppe mit maximal drei C-Atomen steht, besonders bevorzugt $\alpha$-Methacryloxypropyltrimethoxysilan, sowie Glycidyl(meth)acrylate oder andere ethylenisch ungesättigte Derivate des Glycidols, wie z.B. Glycidylvinylether. Des weiteren können ketogruppenhaltige Monomere, wie Acetoacetoxygruppen-haltige Monomere, z.B. Acetoacetoxyethylmethacrylat, Acetoacetoxybutylmethacrylat, Acrylamidomethylacetylaceton und Acetessigsäurevinylester, polymerisierbare Derivate des Diacetons, wie Diacetonacrylamid und Diacetonmethacrylamid, sowie Acrolein als Monomere c verwendet werden. Darüber hinaus können als Monomere c Alkoxyvinylsilane, (Meth)acryloyloxy-alkylsilane, (Meth)acryloyloxyalkyl-sulfonate, -sulfate oder - phosphate, Ethensulfonat und polymerisierbare Ethylenharnstoffderivate, wie N-($\beta$-(Meth)acryloxyethyl)-N,N'-ethylenharnstoff und N-($\beta$-Acrylamidoethyl)-N,N'-ethylenharnstoff verwendet werden.

Als Monomere d werden bevorzugt Acryl- oder Methacrylester von Diolen, wie beispielsweise Hydroxyalkyl (meth)acrylate, besonders Hydroxyethylacrylat oder 1,4-Butandiolmonoacrylat, sowie Acryl- oder Methacrylester von Tetrahydrofurfurylalkohol, halogenhaltige Monomere wie Vinylchlorid und Vinylidenchlorid, ungesättigte Kohlenwasserstoffe wie Ethylen, Propylen, Isobuten, Butadien und Isopren, sowie niedere Vinylether eingesetzt. Als Monomere d können ebenfalls ungesättigte Stickstoffverbindungen, wie N-Vinylformamid, N-Vinylpyrrolidon, Tetrahydrofurfurylamin, Acrylnitril und Methacrylnitril, sowie die Ureido-Monomere wie β-Ureidoethylacrylat, β-Ureidoethylvinylether, N-Dimethylaminoethyl-N'-vinyl-N,N'-ethylenharnstoff und N-Methylaminoethyl-N'-vinyl-N,N'-ethylenharnstoff eingesetzt werden. Des weiteren geeignet sind Halbester der 4 bis 8 C-Atome enthaltenden α,β-monoethylenisch ungesättigten Dicarbonsäuren und der 5 bis 20 C-Atome enthaltenden Alkanole.

Von besonderem Interesse sind Kunstharze A, deren Monomerenbestandteile a, b, c und d so bemessen sind, daß ein nur aus diesen Monomeren aufgebautes Kunstharz eine Glasübergangstemperatur von -40 bis 10°C, insbesondere -30 bis -10°C, aufweisen würde. Nach Fox (T.G. Fox, Bull. Am. Phys. Soc. (Ser. II) 1, 123 [1956]) gilt für die Glasübergangstemperatur von Mischpolymerisaten in guter Näherung:

$$\frac{1}{T_g} = \frac{X^1}{T_g^1} + \frac{X^2}{T_g^2} + \ldots \frac{X^s}{T_g^s}$$

wobei $X^1$, $X^2$, ...., $X^S$ die Massenbrüche der Monomeren 1,2, ... , s und $T_g^1$, $T_g^2$, ....$T_g^S$ die Glasübergangstemperaturen der jeweils nur aus einem der Monomeren 1,2, ... oder s aufgebauten Polymeren in Grad Kelvin bedeuten. Die Glasübergangstemperaturen der aus den Monomeren a bzw. b aufgebauten Homopolymeren sind im wesentlichen bekannt und z.B. in J. Brandrup, E.H. Immergut, Polymer Handbook, 1st Ed., J Wiley, New York, 1966, und 2nd Ed., J. Wiley, New York,1975, aufgeführt.

Als Komponente B haben sich Acetophenon, Benzophenon sowie Acetophenon- oder Benzophenonderivate, die keine ethylenisch ungesättigten Gruppen enthalten, bewährt. Besonders bevorzugt wird Benzophenon und/oder ein Benzophenonderivat ohne ethylenisch ungesättigte Gruppe eingesetzt, wobei bei Raumtemperatur flüssige Mischungen aus Benzophenon und geeigneten Hilfssubstanzen anwendungstechnisch besonders vorteilhaft sind. Derartige Mischungen sind unter anderem aus der EP-A-0 209 831 bekannt.

Der Anteil der Komponente B, bezogen auf das Copolymerisat A, liegt vorzugsweise im Bereich von 0,05 bis 5 Gew.-%. Die Komponente B wird zweckmäßigerweise durch Einrühren, vorzugsweise unter Erwärmen, in eine wenigstens ein Kunstharz A enthaltende Ausgangsdispersion eingearbeitet. Hierbei wird auf ein Einpolymerisieren der Komponente B verzichtet, um in der fertig formulierten Beschichtung unter aktinischem Licht lediglich eine Vernetzung der Oberfläche zu erreichen, wohingegen die Eigenschaften der Beschichtung durch innere Vernetzung mit den Monomeren c erhalten werden. Ein Einpolymerisieren ungesättigter Benzophenonderivate würde eine homogenere Verteilung der Benzophenon-Funktionalitäten bewirken, würde aber gleichzeitig zu einer Verschlechterung der elastischen Eigenschaften nach längerer Bestrahlung mit aktinischem Licht führen, da eine nachträgliche interne Vernetzung im Film stattfinden würde.

Als Emulgatoren C werden vorzugsweise nichtionische und/oder ionische Emulgatoren eingesetzt.

Als nichtionische Emulgatoren können beispielsweise Alkylpolyglykolether wie Ethoxylierungsprodukte von Lauryl-, Oleyl- oder Stearylalkohol oder von Gemischen wie Kokosfettalkohol; Alkylphenolpolyglykolether wie Ethoxylierungsprodukte von Octyl- oder Nonylphenol, Diisopropylphenol, Triisopropylphenol oder von Di- oder Tri-tert.-butylphenol; oder Ethoxylierungsprodukte von Polypropylenoxid verwendet werden.

Als ionogene Emulgatoren kommen vorzugsweise anionische Emulgatoren in Frage. Es kann sich dabei um die Alkali- oder Ammoniumsalze von Alkyl-, Aryl- oder Alkylaryl- sulfonaten, -sulfaten,- phosphaten, -phosphonaten oder Verbindungen mit anderen anionischen Endgruppen handeln, wobei sich auch Oligo- oder Polyethylenoxid- Einheiten zwischen dem Kohlenwasserstoffrest und der anionischen Gruppe befinden können. Typische Beispiele sind Natriumlaurylsulfat, Natriumundecylglykolethersulfat, Natriumlauryldiglykolsulfat, Natriumtetradecyltriglykolsulfat, Natriumoctylphenolglykolethersulfat, Natriumdodecylbenzolsulfonat, Natriumlauryldiglykolsulfat, Ammonium-tri-tert.-butylphenolpenta-oder oktaglykolsulfat.

Als Schutzkolloide D werden vorzugsweise wasserlösliche Carboxymethylcellulosen mit einem Substitutionsgrad von 0,4 bis 2,9, bevorzugt 0,4 bis 1,5 und besonders bevorzugt von 0,6 bis 1,4, verwendet, wobei unter Substitutionsgrad die durchschnittliche Anzahl der pro Anhydroglukoseeinheit eingeführten Carboxymethylgruppen verstanden wird, deren 2%ige wäßrige Lösungen eine Brookfieldviskosität (20 U/Min) bei 25°C von unter 2000 (mit Spindel 3), bevorzugt unter 500 (mit Spindel 2) und besonders bevorzugt unter 100 (mit Spindel 1) mPas besitzen. Die Carboxymethylcellulose wird bevorzugt in Form ihres Ammonium- oder Alkalisalzes eingesetzt. Geeignete kommerzielle Produkte sind z.B. Blanose 7M® , Blanose 7UL® und Blanose 7EL® der Firma Clariant GmbH, sowie Ambergum 3021® der Firma Aqualon. Die erfindungsgemäßen Carboxymethylcellulosen können gegebenenfalls noch weitere Substituenten, insbesondere Alkyl- oder Hydroxyalkylreste mit 1 bis 4 Kohlenstoffatomen, Alkyloxyalkylreste mit 2 bis 6 Kohlenstoffatomen oder Dialkylaminoreste mit insgesamt 2 bis 6 Kohlenstoffatomen enthalten. Besonders geeignete Verbindungen sind beispielsweise Methylcarboxymethylcellulose, Ethylcarboxymethylcellulose, Hydroxyethylcarboxymethylcellulose, Hydroxypropyl-carboxymethylcellulose, Methoxyethylcarboxymethylcellulose, Ethoxyethylcarboxy-methylcellulose und Diethylaminocarboxymethylcellulose. Als weitere Schutzkolloide können z.B. hochmolekulare Verbindungen wie Polyvinylalkohole, Polyvinylpyrrolidone, Polyacrylamide, Polymethacrylamide, Polycarbonsäuren oder deren Alkalimetall- bzw. Ammoniumsalze eingesetzt werden.

Die als Kunstharze A zu verwendenden Polymerisate sind nach den bekannten Methoden der radikalischen Substanz-, Lösungs-, Suspensions- und Emulsionspolymerisation herstellbar. Die bevorzugte Herstellungsform der erfindungsgemäßen wäßrigen Kunstharzzubereitung ist jedoch die wäßrige Form, und es empfiehlt sich daher, das Kunstharz A ebenfalls in dieser Form einzusetzen. Man stellt es demgemäß vorzugsweise durch Polymerisation der jeweiligen Monomeren in wäßrigem Medium unter den bekannten Bedingungen der radikalischen Emulsionspolymerisation in Gegenwart von wasserlöslichen radikalbildenden Initiatoren und Emulgatoren C, sowie gegebenenfalls in Gegenwart von Schutzkolloiden D, Reglern und/oder weiteren Hilfsmitteln her. Die Polymerisation wird nach den gängigen Verfahren der Emulsionspolymerisation durchgeführt, indem die Monomeren in der wäßrigen Phase in Gegenwart von Emulgatoren, Initiatoren und des Schutzkolloids emulgiert und bei Temperaturen von 60 bis 95°C polymerisiert werden. Die Emulsionspolymerisation kann nach den gängigen, dem Fachmann bekannten Verfahren, wie Batch-, Monomerendosier- oder Emulsions-Zulaufverfahren, durchgeführt werden. Vorzugsweise wird nach dem Emulsions-Zulaufverfahren gearbeitet, bei dem eine kleine Menge der Monomeren vorpolymerisiert wird und anschließend die verbleibende Menge an Monomeren in Form einer wäßrigen Emulsion zudosiert wird. Gegebenenfalls können auch mehrere verschiedene Monomeremulsionen nacheinander zudosiert werden. Das Schutzkolloid kann wie der Emulgator zum Teil im Reaktor vorgelegt werden und/oder mit der Monomeremulsion zudosiert werden.

Die Herstellung von hochwertigen Dispersionen gemäß der vorliegenden Erfindung setzt die Anwendung der auf dem Gebiet der Emulsionspolymerisation bestehenden Erfahrungen, auch soweit sie hier nicht beschrieben sind, voraus. Die Mißachtung der dem Fachmann der Emulsionspolymerisation bekannten Regeln kann daher wichtige Eigenschaften, z. B. die Wasserbeständigkeit der Dispersionsfilme, beeinträchtigen. Die Dispersionen sollen deshalb bezogen auf den Gehalt an Polymerisat, die vorzugsweise verwendeten Mengen von bis zu 3 Gew.-%, besonders bevorzugt bis zu 2 Gew.-%, an ionischen Emulgatoren bzw. bis zu 6 Gew.-%, besonders bevorzugt bis zu 4 Gew.-% an nichtionischen Emulgatoren nicht wesentlich überschreiten. Insbesondere werden nur ionische Emulgatoren mit einer Menge von ≤ 2 Gew.-% verwendet.

Zum Starten und Durchführen der Polymerisation bedient man sich Öl- und/oder vorzugsweise wasserlöslicher Radikalbildner oder Redoxsysteme. Geeignet sind z. B. Wasserstoffperoxid, Kalium-, Natrium- oder Ammoniumperoxodisulfat, Dibenzoylperoxid, Laurylperoxid, Tri-tert.- butylperoxid, Bisazodiisobutyronitril, allein oder zusammen mit reduzierenden Komponenten, z. B. Natriumbisulfit, Rongalit® , Glucose, Ascorbinsäure und anderen reduzierend wirkenden Verbindungen. Besonders bevorzugt werden Peroxodisulfate verwendet.

Im allgemeinen beträgt die Temperatur bei der Emulsionspolymerisation 30 bis 90°C, vorzugsweise 50 bis 90°C, und die Polymerisationsinitiatoren werden üblicherweise in Mengen, bezogen auf die Gesamtmenge an Monomeren, von 0,1 bis 10 Gew.-% eingesetzt.

Des weiteren können Regler, wie Mercaptane, insbesondere n-Dodecylmercaptan, Thiophenol und 2-Methyl-5-tert.-butylthiophenol, verwendet werden. Üblicherweise werden Mengen von 0 bis 1 Gew.-%, bevorzugt von 0 bis 0,5 Gew.-% eingesetzt und besonders bevorzugt wird die Dispersion unter Verwendung von ≤ 0,3 Gew.-% eines Reglers hergestellt.

Die Dispersionen werden üblicherweise mit wäßrigen Ammoniak-, Alkali- und Erdalkalihydroxidlösungen auf einen pH-Wert von 6,5 bis 10, vorzugsweise von 7,0 bis 9,0 eingestellt.

Gegebenenfalls kann die Dispersion noch Filmbildehilfsmittel, wie Testbenzin, Texanol® , Butyldiglykol und Butyldipropylenglykol, Weichmacher, wie Dimethylphthalat und Dibutylphthalat, Dispergiermittel wie Polyacrylsäuren und entsprechende Copolymere wie z.B. Lopon 890® und Dispex G40® , Verdicker auf Basis von Polyacrylaten oder Polyurethanen wie z.B. Borchigel L75® und Tafigel PUR 40® , Konservierungsmittel, Entschäumer wie z.B. Mineralöl- oder Silikonentschäumer, Netzmittel, wie Aminomethylpropanol und andere Additive, wie sie zur Formulierung von Beschichtungsmassen üblich sind, enthalten.

Die erfindungsgemäßen Kunstharzzubereitungen sind besonders gut zur Verwendung in Anstrichmitteln für Wände, Böden und Decken, als elastische Bindemittel für Lederfasern und als Markierungsfarben für Wege und Straßen, sowie in Putzen geeignet, wobei sie eine dauerhafte Rißüberbrückung, niedrige Klebrigkeit und Anschmutzneigung, sowie eine gute Beständigkeit gegenüber Wasser gewährleisten.

Die vorliegende Erfindung wird im folgenden anhand von Ausführungsbeispielen näher beschrieben, ohne dadurch jedoch beschränkt zu werden.

Beispiel 1

Herstellung einer wässrigen Copolymerisatdispersion

Ein Monomergemisch aus 50 g n-Butylacrylat, 20 g 2-Ethylhexylacrylat, 27 g Styrol, 2 g Methacrylsäure und 1 g Vinyltrimethoxysilan mit 1,8 g Na-Salz des $C_{12}$-Alkyltriglycolethersulfats wird in 100 g Wasser emulgiert.

Anschließend werden 10 % der wäßrigen Emulsion mit 10 % einer wäßrigen Lösung von 0,5 g Natriumperoxodisulfat in 10 g Wasser versetzt und unter Rühren auf die Temperatur von 80°C erhitzt. Anschließend werden im Verlauf von 2 Stunden die übrige Menge der wäßrigen Emulsion und parallel dazu über 2,5 Stunden die übrige Menge der wäßrigen Initiatorlösung kontinuierlich unter Rühren zugeführt. Die Polymerisationstemperatur beträgt 80°C. Nach beendeter Initiatordosierung wird noch 1 Stunde nachpolymerisiert.

In die so erhaltene, ca. 50 %ige wäßrige Kunstharzdispersion wird 0,7 g Benzophenon eingerührt.

Beispiel 2 (Vergleich)

Herstellung einer wässrigen Copolymerisatdispersion

Ein Monomergemisch aus 50 g n-Butylacrylat, 20 g 2-Ethylhexylacrylat, 27 g Styrol und 2 g Methacrylsäure ohne Vinyltrimethoxysilan mit 1,8 g Na-Salz des $C_{12}$-Alkyltriglycolethersulfats wird in 100 g Wasser emulgiert. Anschließend werden 10% der wäßrigen Emulsion mit 10% einer wäßrigen Lösung von 0,5 g Natriumperoxodisulfat in 10 g Wasser versetzt und unter Rühren auf die Temperatur von 80°C erhitzt. Anschließend werden im Verlauf von 2 Stunden die übrige Menge der wäßrigen Emulsion und parallel dazu über 2,5 Stunden die übrige Menge der wäßrigen Initiatorlösung kontinuierlich unter Rühren zugeführt. Die Polymerisationstemperatur beträgt 80°C. Nach beendeter Initiatordosierung wird noch 1 Stunde nachpolymerisiert.

In die so erhaltene ca. 50 %ige wäßrige Kunstharzdispersion werden 0,7 g Benzophenon eingerührt.

Beispiel 3

Nachweis erhöhter Elastizität und Rückstellvermögen und reduzierter Oberflächenklebrigkeit nach UV-Bestrahlung bei nur geringfügig reduzierter Reißdehnung der erfindungsgemäßen Kunstharzzubereitungen

Die beiden Kunstharzdispersionen des Beispiels 1 und des Vergleichsbeispiels 2 werden zu Filmen mit einer Trockendicke von 0,5 mm unter Standardbedingungen über 7 Tage verfilmt. Danach wird durch Tasten mit der Hand die Oberflächenklebrigkeit geprüft und gemäß DIN 53 230 beurteilt (0 = bestmöglicher Wert, 5 = geringstmöglicher Wert). Diese Filme werden gemäß A. Zosel, "Research on the Properties of cured films of aqueous dispersions of polymers" in Double Liaison Chimie des Peintures - 284, Oktober 1987, verwendet, um das Speichermodul (G' [N/mm$^2$]); 50°C; 0,1 Hz) zu bestimmen. In einem weiteren Experiment werden die Filme über 0,5 Stunden einer UV-Bestrahlung ausgesetzt und die Oberflächenklebrigkeit und das Speichermodul erneut bestimmt. Die Ergebnisse sind in Tabelle 1 dargestellt. Zur Bestimmung der Reißdehnung der Dispersionsfilme werden Filme mit den Maßen 0,8 x 3 x 20 mm mit einem Materialprüfsystem der Firma Instron, Series IX untersucht und sowohl die Reißdehnung, als auch die gemessene Spannung beim Filmriß aufgetragen. Um das Rückstellvermögen dieser Filme zu bestimmen, werden Filme mit den Maßen

0,8 x 3 x 20 mm senkrecht an einem Stativ befestigt und am unteren Ende der Filme ein Gewicht von 200 g befestigt. Nach 24 Stunden wird die Dehnung der Filme in % gemessen und das Gewicht entfernt. Nach weiteren 24 Stunden ohne Gewicht (Relaxation) wird die verbleibende (Restdehnung) des Films in % gemessen. Die Ergebnisse hierzu sind in Tabelle 2 dargestellt.

Tabelle 1

| | | G' | tanö = G''/G' | Oberflächenklebrigkeit (nach DIN 53230) | Tack (Skt) |
|---|---|---|---|---|---|
| Beispiel 1 | vor UV-Bestrahlung | 3,63 | 0,19 | 3 | 950 |
| | nach UV-Bestrahlung | 4,21 | 0,16 | 1 | 320 |
| Beispiel 2 | vor UV-Bestrahlung | 1,59 | 0,48 | 5 | 1450 |
| | nach UV-Bestrahlung | 1,85 | 0,39 | 4 | 1050 |

Tabelle 2

| | | Reißdehnung (%) | Spannung [MPa] | Dehnung bei Belastung (%) | Restdehnung nach Belastung (%) |
|---|---|---|---|---|---|
| Beispiel 1 | vor UV-Bestrahlung | 792 | 3,21 | 280 | 15 |
| | nach UV-Bestrahlung | 675 | 3,45 | 225 | 10 |
| Beispiel 2 | vor UV-Bestrahlung | 3945 | 0,40 | gerissen | gerissen |
| | nach UV-Bestrahlung | 797 | 0,87 | gerissen | gerissen |

Beispiel 4

Nachweis der erhöhten Wasserbeständigkeit, der niedrigeren Blockfestigkeit und des geringen Abfalls der Reißdehnung nach UV-Bestrahlung von elastischen Beschichtungen mit dem erfindungsgemäßen Bindemittel

Es werden Fassadenfarben nach folgender allgemeiner Zusammensetzung dargestellt:

41,0 g Bindemittel
19,4 g Wasser
0,3 g Hydroxyethylcellulose
0,1 g Tetranatriumpyrophosphat (als 25 %ige Lösung)
0,2 g Chloracetamid
0,7 g Testbenzin
0,3 g Ammoniumsalz einer Polyacrylsäure (als 40 %ige Lösung)
0,5 g Entschäumer auf Silikonbasis
0,2 g Ammoniaklösung (25%ig)
13,0 g Titandioxid (mittlere Korngröße 1 $\mu$m)
5,0 g Talkum (mittlere Korngröße 5 $\mu$m)
10,0 g Calciumcarbonat (mittlere Korngröße 2,5 $\mu$m)
9,0 g Calciumcarbonat (mittlere Korngröße 5 $\mu$m)
0,3 g einer 30%-igen Polyurethanverdickerlösung

Als Bindemittel werden die Dispersionen aus Beispiel 1 sowie Vergleichsbeispiel 2 verwendet.

Zur Bestimmung der Reißdehnung der Farbfilme werden Filme mit einer 400 $\mu$m-Rakel mit den Trockenmaßen 0,12 x 15 x 50 mm mit einem Materialprüfsystem der Firma Instron, Series IX vor und nach 28 Tagen QUV-Bestrahlung (nach DIN 53455) untersucht und sowohl die Reißdehnung, als auch die gemessene Spannung beim Filmriß aufgetragen.

Um das Rückstellvermögen dieser Farbfilme zu bestimmen, werden Filme mit einer 1000 $\mu$m-Kastenrakel aufgezogen und die erhaltenen Filme nach Trocknung (Normbedingung /7 Tage) mit den Maßen 0,32 x 60 x 50 mm senkrecht an einem Stativ befestigt und am unteren Ende der Filme ein Gewicht von 800 g befestigt. Nach 24 Stunden wird die Dehnung der Filme in % gemessen und das Gewicht entfernt. Nach weiteren 24 Stunden ohne Gewicht (Relaxation) wird die verbleibende (Restdehnung) des Films in % gemessen.

Bei der Bestimmung der Blockfestigkeit werden Dispersions-, Farb- oder Lackfilme mit einer definierten Gewichtskraft [2 kg] und bei Raumtemperatur gegeneinander verpreßt. Anschließend wird die Gewichtskraft in [g] ermittelt, die man benötigt, um eine definierte Fläche der Filme (6,25 cm$^2$) wieder voneinander zu trennen. Die Blockfestigkeit ist um so besser, je geringer die Kraft pro Filmfläche ist, um die Filme voneinander zu trennen. Sie ist somit ein Maß für die Oberflächenklebrigkeit der Filme untereinander.

Die 1. Wasseraufnahme wird ermittelt, in dem man die Gewichtszunahme eines getrockneten Farbfilms, welcher mit einer 800 $\mu$m Rakel aufgezogen und 7 Tage bei Normklima getrocknet wurde, nach Wasserlagerung bestimmt und in Prozent bezogen auf das Ausgangsgewicht angibt. Nach Trocknung und zweiter Lagerung in Wasser wird die 2. Wasseraufnahme ermittelt, die dadurch, daß ein Teil des Emulgators aus dem Film herausgewaschen wurde, meist niedriger ist und somit im Vergleich zur Praxis einem gealterten Film entspricht.

Zur Bestimmung der Frühwasserfestigkeit wird mit Hilfe einer Kastenrakel (300 $\mu$m Spalthöhe) ein ca. 30 cm langer und 6 cm breiter Farbstreifen der betreffenden Fassadenfarbe auf Lenetafolie aufgezogen und 2 Stunden im Klimaraum (Normklima) getrocknet. Ein Photometer wird mit 50 g entionisiertem Wasser in einer Petrischale (Durchmesser 9,5 cm) auf 100 % kalibriert. Aus den 2 Stunden im Klimaraum gelagerten Farbfilmaufzügen wird ein 6 cm x 26 cm großer Filmstreifen herausgeschnitten. Dieser wird mit der beschichteten Seite nach innen, wandgängig in ein 400 ml-Becherglas (breite Form) gelegt. Dem Becherglas werden 10 g Kunststoffgranulat und 300 g entionisiertes Wasser zugewogen. Auf einem Magnetrührer wird mit einem Magnetrührstab bei ca. 750 Upm gerührt, so daß das Granulat an die beschichtete Oberfläche der Folie schlägt. Nach 1, 2 und 3 Stunden Rührzeit wird die Trübung des Waschwassers gemessen. Dazu werden jeweils 50 g Waschwasser entnommen, in der Petrischale eingewogen und die Trübung am kalibrierten Photometer gemessen. Die gemessene Lösung wird in das Becherglas zurückgeschüttet. Nach 3 Stunden wird die Folie visuell auf Veränderungen untersucht.

Zur Bestimmung des Blisterverhaltens der Farben werden diese auf der Vorderseite einer Faserzementplatte gut deckend mit einer Malerrolle appliziert. Nach einer Trocknungszeit von 24 Stunden wird ein zweiter Anstrich in gleicher Weise aufgebracht. Zweckmäßigerweise werden mehrere Proben auf einer Faserzementplatte appliziert. Nach einer 24 stündigen Trocknung des Zweitanstrichs werden die Faserzementplatten mit der beschichteten Seite nach unten auf ein Wasserbad (Blisterbad) gelegt. Die Temperatur des Wasserbades beträgt 50°C, der Abstand der Wasseroberfläche zur Probeplatte ist 15 cm, die Probeplatten decken das Wasserbad vollflächig ab. Nach 8 Stunden Belastung werden die Probeplatten vom Blisterbad entnommen und senkrecht bei Raumtemperatur zum Trocknen aufgestellt. Die Trocknungszeit sollte mindestens 2 Stunden betragen. Die Auswertung erfolgt visuell an der getrockneten Probe. Beurteilt werden Verfärbungen, Fleckenbildungen und Ausblühungen nach einem Benotungsschema (1 = sehr gut, keine Ausblühungen oder Flecken; 5 = schlecht, starke Fleckenbildung bzw. Ausblühungen).

Die Ergebnisse der oben beschriebenen Meßmethoden sind in der Tabelle 3 dargestellt.

Tabelle 3

|  | Beispiel 1 | Beispiel 2 |
|---|---|---|
| Reißdehnung [%] | 350 | 640 |
| Spannung [MPa] | 4,1 | 2,2 |
| Reißdehnung nach UV [%] | 285 | 310 |
| Spannung nach UV [MPa] | 4,3 | 2,3 |
| Dehnung bei Belastung [%] | 70 | gerissen |
| Restdehnung nach Belastung [%] | 10 | gerissen |
| Blockfestigkeit [g/6,25 cm$^2$] | 160 | 1000 |
| 1. Wasseraufnahme [%] | 7 | 10 |
| 2. Wasseraufnahme [%] | 6 | 8 |
| Blistertest | 2 | 2 |
| Frühwasserfestigkeit | 1 | 2 |

Beispiel 5

Nachweis erhöhter Scherstabilität einer erfindungsgemäßen Dispersion in Gegenwart von Füllstoffen

Ein Monomergemisch aus 50 g n-Butylacrylat, 20 g 2-Ethylhexylacrylat, 27 g Styrol, 2 g Methacrylsäure und 1 g Vinyltrimethoxysilan mit 0,3 g Ambergum 3021® der Firma Aqualon und 1,8 g Na-Salz eines $C_{12}$ Alkyltriglycolethersulfats wird in 100 g Wasser emulgiert. Anschließend werden 10% der wäßrigen Emulsion mit 10% einer wäßrigen Lösung von 0,5 g Natriumperoxodisulfat in 10 g Wasser versetzt und unter Rühren auf die Temperatur von 80°C erhitzt. Anschließend werden im Verlauf von 2 Stunden die übrige Menge der wäßrigen Emulsion und parallel dazu über 2,5 Stunden die übrige Menge der wäßrigen Initiatorlösung kontinuierlich unter Rühren zugeführt. Die Polymerisationstemperatur beträgt 80°C. Nach beendeter Initiatordosierung wird noch 1 Stunde nachpolymerisiert. Diese Dispersion wird gemeinsam mit der Dispersion aus Beispiel 1 auf Scherstabilität untersucht. Der Feststoff der beiden Dispersionen wird mit deionisiertem Wasser auf exakt 45% eingestellt. Von der Dispersion mit 45% Feststoff werden 100 g in einem 500 ml Becher durch Rühren mit einem Glasstab mit 200 g eines grobteiligen Calciumcarbonats (23 $\mu$m mittlere Teilchengröße) vermischt. Anschließend wird diese Mischung in einem Dissolver (Scheibendurchmesser 5 cm) für eine Minute bei 1000 Umdrehungen vermengt. Der Dissolver wird dann angehalten und erneut mit einer Geschwindikeit von 3000 Upm gestartet und gleichzeitig die Stoppuhr gestartet. Die Mischung wird unter diesen Bedingungen gerührt, bis ein sichtbarer Stabilitätsverlust (Koagulation, Bildung von Grobteilchen) eintritt. Das Zeitintervall zwischen Rührerstart (bei 3000 Upm) und Stabilitätsverlust der Mischung wird als Maß für die Stabilität angegeben. Die Ergebnisse sind in Tabelle 4 dargestellt.

Tabelle 4

|  | Beispiel 1 | Beispiel 5 |
|---|---|---|
| Scherstabilität mit Füllstoffen [min] | 6,5 | 16,5 |

**Patentansprüche**

1. Wässrige Copolymerisatdispersion, im wesentlichen bestehend aus

   A) einer wäßrigen Dispersion eines Copolymerisates mit einem Feststoffanteil von 20 bis 65 Gew,%, wobei das Copolymerisat aus

   a) 40 bis 99,9 Gew. % mindestens eines Esters aus 3 bis 6 C-Atome enthaltenden $\alpha,\beta$-monoethylenisch ungesättigten Carbonsäuren und 1 bis 18 C -Atome enthaltenden Alkanolen und 0 bis 40 Gew.% mindestens einer vinylaromatischen Verbindung (Monomere a),
   b) 0,05 bis 10 Gew.-% mindestens einer 3 bis 8 C-Atome enthaltenden $\alpha,\beta$-monoethylenisch ungesättigten ein- oder zweibasischen Säure, und/oder deren Anhydride und 0 bis 10 Gew: % wenigstens eines 3 bis 8 C-Atome enthaltenden $\alpha,\beta$-monoethylenisch ungesättigten Carbonsäureamids, welches am Stickstoff einfach oder doppelt mit bis zu 5 C-Atomen enthaltenden Alkylen, Alkanolen, Alkylsulfaten oder Alkylethersulfaten substituiert sein kann (Monomere b),
   c) 0,05 bis 10 Gew.-% mindestens eines monoethylenisch ungesättigten, vernetzenden Monomeren (Monomere c), wobei es sich bei mindestens einem der vernetzenden Monomere um ein Silan der allgemeinen Formel $CH_2=CH-Si(OX)_3$, ein Silan der allgemeinen Formel $CH_2=CZ-COO-Y-Si(OX)_3$, ein ethylenisch ungesättigtes Derivat des Glycidols, ein ketogruppenhaltiges Monomer, ein Alkoxyvinylsilan, ein (Meth)acryloyloxyalkylsulfonat, -sulfat oder -phosphat, Ethensulfonat oder ein polymerisierbares Ethylenharnstoffderivat handelt, wobei X für ein H-Atom, eine Acyl-Gruppe oder eine Alkylgruppe mit maximal drei C-Atomen, Z für ein H-Atom, eine Methylgruppe oder eine Ethylgruppe und Y für eine $C_nH_{2n}$-Gruppe mit n = 2 bis 6 steht, und
   d) 0 bis 30 Gew.-% mindestens eines sonstigen copolymerisierbaren monoethylenisch ungesättigten Monomeren (Monomere d), in einpolymerisierter Form,

   aufgebaut ist, und wobei die Gewichtsanteile der Monomeren a, b, c, und d innerhalb der angegebenen Grenzen so gewählt sind, daß ein aus diesen Monomeren aufgebautes Kunstharz eine Glasübergangstemperatur im Bereich von - 50 bis 35 °C aufweisen würde,
   B) 0 bis 10 Gew. %, bezogen auf das Copolymerisat A, an Benzophenon, Acetophenon, einem oder mehreren Acetophenon- oder Benzophenonderivaten ohne ethylenisch ungesättigte Gruppe oder einem Gemisch davon,
   C) 0,3 bis 10 Gew. %, bezogen auf das Copolymerisat A, an Emulgatoren und
   D) 0 bis 5 Gew.-%, bezogen auf das Copolymerisat A, an Schutzkolloiden.

2. Wässrige Copolymerisatdispersion gemäß Anspruch 1, **dadurch gekennzeichnet, daß** als Ester aus 3 bis 6 C-Atome enthaltenden $\alpha,\beta$-monoethylenisch ungesättigten Carbonsäuren und 1 bis 18 C-Atome enthaltenden Alkanolen Ester der Acryl- und/oder Methacrylsäure eingesetzt werden.

3. Wässrige Copolymerisatdispersion gemäß Anspruch 1, **dadurch gekennzeichnet, daß** als vinylaromatische Verbindung Styrol eingesetzt wird.

4. Wässrige Copolymerisatdispersion gemäß Anspruch 1, **dadurch gekennzeichnet, daß** als 3 bis 8 C-Atome enthaltende $\alpha,\beta$-monoethylenisch ungesättigte ein- oder zweibasische Säuren $\alpha,\beta$-monoethylenisch ungesättigte Carbonsäuren oder deren wasserlösliche Derivate eingesetzt werden.

5. Wässrige Copolymedsatdispersion gemäß Anspruch 1, **dadurch gekennzeichnet, daß** als $\alpha,\beta$-monoethylenisch ungesättigtes Carbonsäureamid Methacrylamid eingesetzt wird.

6. Wässrige Copolymerisatdispersion gemäß Anspruch 1, **dadurch gekennzeichnet, daß** es sich bei den vernetzenden Monomeren c um Vinyltrimethoxysilan, Vinyltriethoxysilan, Vinyltris-2-methoxysilan, α-Methacryloxypropyltrimethoxysilan, Glycidyl(meth)acrylate und/oder Glycidylvinylether handelt.

7. Wässrige Copolymerisatdispersion gemäß Anspruch 1, **dadurch gekennzeichnet, daß** es sich bei den vernetzenden Monomeren c um Acetoacetoxyethyl-methacrylat, Acetoacetoxybutylmethacrylat, Acrylamidomethylacetylaceton, Acetessigsäurevinylester, polymerisierbare Derivate des Diacetons, insbesondere um Diacetonacrylamid und Diacetonmethacrylamid, sowie um Acrolein handelt.

8. Wässrige Copolymerisatdispersion gemäß Anspruch 1, **dadurch gekennzeichnet, daß** es sich bei den vernetzenden Monomeren c um Alkoxyvinylsilane oder (Meth)acryloyloxyalkylsilane handelt.

9. Wässrige Copolymerisatdispersion gemäß Anspruch 1, **dadurch gekennzeichnet, daß** es sich bei den vernetzenden Monomeren c um N-(β-(Meth)acryloxyethyl)-N,N'-ethylenharnstoff oder N-(β-Acrylamidoethyl)-N,N'-ethylenharnstoff handelt.

10. Wässrige Copolymerisatdispersion gemäß mindestens einem der vorhergehenden Ansprüche, **dadurch gekennzeichnet, daß** die Gewichtsanteile der Monomeren a, b, c und d so bemessen sind, daß ein aus diesen Monomeren aufgebautes Kunstharz eine Glasübergangstemperatur von - 40 bis 10 °C aufweisen würde.

11. Wässrige Copolymerisatdispersion gemäß mindestens einem der vorhergehenden Ansprüche, **dadurch gekennzeichnet, daß** als Komponente B Benzophenon und/oder ein Benzophenonderivat ohne ethylenisch ungesättigte Gruppe eingesetzt wird.

12. Wässrige Copolymerisatdispersion gemäß mindestens einem der vorhergehenden Ansprüche, **dadurch gekennzeichnet, daß** als Emulgatoren C nichtionische und/oder ionische Emuigatoren eingesetzt werden.

13. Wässrige Copolymerisatdispersion gemäß mindestens einem der vorhergehenden Ansprüche, **dadurch gekennzeichnet, daß** als Schutzkolloid D wasserlösliche Carboxymethylcellulosen mit einem Substitutionsgrad von 0,4 bis 2,9 eingesetzt werden.

14. Verfahren zur Herstellung einer wässrigen Copolymerisatdispersion gemäß Anspruch 1, **dadurch gekennzeichnet, daß** die Monomeren a, b, c und d in wässrigem Medium in Gegenwart von wasserlöslichen radikalbildenden Initiatoren, Emulgatoren C sowie ggfs. Schutzkolloiden D, Reglern und/oder weiteren Hilfsmitteln durch Emulsionspolymerisation radikalisch polymerisiert werden.

15. Verwendung einer wässrigen Copolymerisatdispersion gemäß mindestens einem der Ansprüche 1 bis 13 in Anstrichmitteln für Wände, Böden und Decken, in Markierungsfarben für Wege und Straßen sowie in Putzen.

**Claims**

1. An aqueous copolymer dispersion consisting essentially of

   A) an aqueous dispersion of a copolymer having a solids fraction of from 20 to 65% by weight, said copolymer being composed of

   a) from 40 to 99.9% by weight of at least one ester of α,β-monoethylenically unsaturated carboxylic acids containing 3 to 6 carbon atoms and alkanols containing 1 to 18 carbon atoms and from 0 to 40% by weight of at least one vinylaromatic compound (monomers a),
   b) from 0.05 to 10% by weight of at least one α,β-monoethylenically unsaturated mono- or dibasic acid containing 3 to 8 carbon atoms, and/or anhydrides thereof, and from 0 to 10% by weight of at least one α,β-monoethylenically unsaturated carboxamide which contains 3 to 8 carbon atoms and can be substituted once or twice on the nitrogen by alkyl ether sulfates, alkyl sulfates, alkanols or alkyls containing up to 5 carbon atoms (monomers b),
   c) from 0.05 to 10% by weight of at least one monoethylenically unsaturated crosslinking monomer (monomers c), at least one of the crosslinking monomers being a silane of the formula $CH_2=CH-Si(OX)_3$, a silane of the formula $CH_2=CZ-COO-Y-Si(OX)_3$, an ethylenically unsaturated derivative of glycidol, a monomer containing keto groups, an alkoxyvinylsilane, a (meth)acryloyloxyalkylsulfonate, (meth)acryloyloxyalkyl sulfate or (meth)-acryloyloxyalkyl phosphate, ethenesulfonate or a polymerizable ethyleneurea derivative, X being a hydrogen atom, an acyl group or an alkyl group having not more than three carbon atoms, Z being a hydrogen atom, a methyl group or an ethyl group, and Y being a group $C_nH_{2n}$ where n = 2 to 6, and

d) from 0 to 30% by weight of at least one other copolymerizable monoethylenically unsaturated monomer (monomers d), in copolymerized form,

and the weight fractions of the monomers a, b, c and d being chosen within the stated limits such that a synthetic resin composed of these monomers alone would have a glass transition temperature in the range from -50 to 35°C,

B) from 0 to 10% by weight, based on the copolymer A, of benzophenone, acetophenone, one or more acetophenone derivatives or benzophenone derivatives without an ethylenically unsaturated group, or a mixture thereof,

C) from 0.3 to 10% by weight, based on the copolymer A, of emulsifiers, and

D) from 0 to 5% by weight, based on the copolymer A, of protective colloids.

2. An aqueous copolymer dispersion as claimed in claim 1, wherein said esters of $\alpha,\beta$-monoethylenically unsaturated carboxylic acids containing 3 to 6 carbon atoms and alkanols containing 1 to 18 carbon atoms are esters of acrylic and/or methacrylic acid.

3. An aqueous copolymer dispersion as claimed in claim 1, wherein said vinylaromatic compound is styrene.

4. An aqueous copolymer dispersion as claimed in claim 1, wherein said $\alpha,\beta$-monoethylenically unsaturated mono- or dibasic acids containing 3 to 8 carbon atoms are $\alpha,\beta$-monoethylenically unsaturated carboxylic acids or their water-soluble derivatives.

5. An aqueous copolymer dispersion as claimed in claim 1, wherein said $\alpha,\beta$-monoethylenically unsaturated carboxamide is methacrylamide.

6. An aqueous copolymer dispersion as claimed in claim 1, wherein said crosslinking monomers c are vinyltrimethoxysilane, vinyltriethoxysilane, vinyltris-2-methoxysilane, $\alpha$-methacryloyloxypropyltrimethoxysilane, glycidyl (meth)acrylates and/or glycidyl vinyl ether.

7. An aqueous copolymer dispersion as claimed in claim 1, wherein said crosslinking monomers c are acetoacetoxyethyl methacrylate, acetoacetoxybutyl methacrylate, acrylamidomethylacetylacetone, vinyl acetoacetate, polymerizable derivatives of diacetone, especially diacetoneacrylamide and diacetonemethacrylamide, and acrolein.

8. An aqueous copolymer dispersion as claimed in claim 1, wherein said crosslinking monomers c are alkoxyvinylsilanes or (meth)acryloyloxyalkyl-silanes.

9. An aqueous copolymer dispersion as claimed in claim 1, wherein said crosslinking monomers c are N-($\beta$-(meth)acryloyloxyethyl)-N,N'-ethyleneurea or N-($\beta$-acrylamidoethyl)-N,N'-ethyleneurea.

10. An aqueous copolymer dispersion as claimed in at least one of the preceding claims, wherein the weight fractions of the monomers a, b, c and d are selected such that a synthetic resin composed of these monomers alone would have a glass transition temperature of from -40 to 10°C.

11. An aqueous copolymer dispersion as claimed in at least one of the preceding claims, wherein said component B is benzophenone and/or a benzophenone derivative without an ethylenically unsaturated group.

12. An aqueous copolymer dispersion as claimed in at least one of the preceding claims, wherein said emulsifiers C are nonionic and/or ionic emulsifiers.

13. An aqueous copolymer dispersion as claimed in at least one of the preceding claims, wherein said protective colloid D comprises water-soluble carboxymethylcelluloses having a degree of substitution of from 0.4 to 2.9.

14. A process for preparing an aqueous copolymer dispersion as claimed in claim 1, which comprises subjecting the monomers a, b, c and d to free-radical emulsion polymerization in an aqueous medium in the presence of water-soluble free-radical initiators, emulsifiers C and, if desired, protective colloids D, regulators and/or further auxiliaries.

**15.** The use of an aqueous copolymer dispersion as claimed in at least one of claims 1 to 13 in coating compositions for walls, floors and ceilings, in marking paints for paths and highways, and in renders.

**Revendications**

**1.** Dispersion aqueuse de copolymère, constituée essentiellement de

A) une dispersion aqueuse d'un copolymère présentant une teneur en substances solides de 20 à 65 % en poids, le copolymère étant constitué de

a) 40 à 99,9 % en poids d'au moins un ester d'acides carboxyliques $\alpha,\beta$-mono-éthyléniquement insaturé comportant 3 à 6 atomes de carbone et d'alcanols contenant 1 à 18 atomes de carbone et 0 à 40 % en poids d'au moins un composé vinylique aromatique (monomère a),
b) 0,05 à 10 % en poids d'au moins un acide mono- ou bibasique $\alpha,\beta$-mono-éthyléniquement insaturé comportant 3 à 8 atomes de carbone et/ou leurs anhydrides et 0 à 10 % en poids d'au moins un amide d'acide carboxylique $\alpha,\beta$-mono-éthyléniquement insaturé comportant 3 à 8 atomes de carbone qui peut être substitué sur l'azote de manière simple ou double par des alkyles, alcanols, alkylsulfates ou alkyléthersulfates comportant jusqu'à 5 atomes de carbone (monomère b),
c) 0,05 à 10 % en poids d'au moins un monomère de réticulation mono-éthyléniquement insaturé (monomère c) qui est, dans le cas d'au moins un des monomère de réticulation, un silane de formule générale $CH_2 = CH\text{-}Si(OX)_3$, un silane de formule générale $CH_2 = CZ\text{-}COO\text{-}Y\text{-}Si(OX)_3$, un dérivé éthyléniquement insaturé de glycidol, un monomère contenant un groupe céto, un alcoxyvinylsilane, un (méth)acryloyloxy-alkylsulfonate, -sulfate ou -phosphate, un éthène-sulfonate ou un dérivé d'éthylène-urée polymérisable, X étant un atome d'hydrogène, un groupe acyle ou un groupe alkyle comportant au maximum trois atomes de carbone, Z étant un atome de H, un groupe méthyle ou un groupe éthyle et Y étant un groupe $C_nH_{2n}$, n ayant une valeur de 2 à 6, et
d) 0 à 30 % en poids d'au moins un autre monomère mono-éthyléniquement insaturé copolymérisable (monomère d) sous une forme polymérisée, et dans lequel la proportion en poids des monomères a, b, c et d est choisie dans les limites indiquées de sorte que l'une des résines synthétique constituée à partir de ces monomères présente une température de transition vitreuse dans une plage de -50 à 35° C,

B) 0 à 10 % en poids par rapport au copolymère A, de benzophénone, d'acétophénone, d'un ou de plusieurs dérivés d'acétophénone ou de benzophénone sans groupe éthyléniquement insaturé ou d'un mélange de ceux-ci,
C) 0,3 à 10 % en poids par rapport au copolymère A, d'un émulsifiant, et
D) 0 à 5 % en poids par rapport au copolymère A d'un colloïde protecteur.

**2.** Dispersion aqueuse de copolymère selon la revendication 1, **caractérisée en ce que** l'on utilise comme ester d'acides carboxyliques $\alpha,\beta$-mono-éthyléniquement insaturés contenant 3 à 6 atomes de carbone et d'alcanols comportant 1 à 18 atomes de carbone, des esters d'acide acrylique et/ou méthacrylique.

**3.** Dispersion aqueuse de copolymère selon la revendication 1, **caractérisée en ce que** l'on utilise comme composés vinyliques aromatiques, du styrène.

**4.** Dispersion aqueuse de copolymère selon la revendication 1, **caractérisée en ce que** l'on utilise comme acides carboxyliques mono- ou bibasiques $\alpha,\beta$-mono-éthyléniquement insaturés contenant 3 à 8 atomes de carbone, des acides carboxyliques $\alpha,\beta$-mono-éthyléniquement insaturés ou leurs dérivés hydrosolubles.

**5.** Dispersion aqueuse de copolymère selon la revendication 1, **caractérisée en ce que** l'on utilise comme amide d'acide carboxylique $\alpha,\beta$-mono-éthyléniquement insaturé, du méthacrylamide.

**6.** Dispersion aqueuse de copolymère selon la revendication 1, **caractérisée en ce que** les monomères c de réticulation sont le vinyltriméthoxysilane, le vinyltriéthoxysilane, le vinyltris-2-méthoxysilane, l'$\alpha$-méthacryloxypropyl-triméthoxysilane, le glycidyl-(méth)acrylate et/ou le glycidylvinyléther.

**7.** Dispersion aqueuse de copolymère selon la revendication 1, **caractérisée en ce que** les monomères c de réticulation sont l'acéto-acétoxyéthyl-méthacrylate, l'acéto-acétoxybutyl-méthacrylate, l'acrylamidométhylacétylacétone, le vinyl-ester d'acide acéto-acétique, le dérivé polymérisable de diacétone, en particulier le diacétone-acrylamide et le diacétone-méthacrylamide, et l'acroléine.

**8.** Dispersion aqueuse de copolymère selon la revendication 1, **caractérisée en ce que** les monomères c de réticulation sont l'alcoxyvinylsilane ou le (méth)acryloyloxyalkylsilane.

**9.** Dispersion aqueuse de copolymère selon la revendication 1, **caractérisée en ce que** les monomères c de réticulation sont le N-(β-(méth)acryloxy-éthyl)-N,N'-éthylène-urée ou le N-(β-acrylamido-éthyl)-N,N'-éthylène-urée.

**10.** Dispersion aqueuse de copolymère selon l'une quelconque des revendications précédentes, **caractérisée en ce que** la proportion en poids des monomères a, b, c et d est mesurée de telle sorte que la résine synthétique constituée à partir de ces monomères présente une température de transition vitreuse de -40 à 10° C.

**11.** Dispersion aqueuse de copolymère selon l'une quelconque des revendications précédentes, **caractérisée en ce que** l'on utilise comme composant B, du benzophénone et/ou un dérivé de benzophénone ne comportant pas de groupe éthyléniquement insaturé.

**12.** Dispersion aqueuse de copolymère selon l'une quelconque des revendications précédentes, **caractérisée en ce que** l'on utilise comme émulsifiant C, des émulsifiants non ioniques et/ou ioniques.

**13.** Dispersion aqueuse de copolymère selon l'une quelconque des revendications précédentes, **caractérisée en ce que** l'on utilise comme colloïde protecteur D, des carboxyméthylcelluloses hydrosolubles avec un degré de substitution de 0,4 à 2,9.

**14.** Procédé de production d'une dispersion aqueuse de copolymère selon la revendication 1, **caractérisée en ce que** les monomères a, b, c et d sont soumis à une polymérisation radicalaire par polymérisation en émulsion dans un milieu aqueux en présence d'initiateurs de formation de radicaux, d'émulsifiants C et éventuellement de colloïdes protecteurs D, de régulateurs et/ou d'autres auxiliaires.

**15.** Utilisation d'une dispersion aqueuse de copolymère selon l'une quelconque des revendications 1 à 13, dans des peintures pour les murs, les sols et les plafonds, les peintures de marquage des voies et des rues ainsi que dans le nettoyage.